# EUROPEAN PATENT SPECIFICATION

(11) **EP 1 951 832 B1**
(45) Date of publication and mention of the grant of the patent: **21.03.2012**
(21) Application number: 06812369.4
(22) Date of filing: 02.11.2006
(51) Int. Cl.: F17C 13/00, B32B 37/10, B32B 37/12, C09J 5/06

(54) **BONDING METHOD BETWEEN SECONDARY GAS BARRIER AND INSULATION PANEL USING HEATING PAD**
VERFAHREN ZUM BINDEN VON SEKUNDÄREN GASSPERREN UND ISOLIERPLATTEN MIT EINEM HEIZKISSEN
PROCEDE DE COLLAGE D' UNE BARRIERE AUX GAZ SECONDAIRE SUR UN PANNEAU ISOLANT A L' AIDE D' UN TAMPON CHAUFFANT

(30) Priority: 03.11.2005 KR 20050104755
(43) Date of publication of application: 06.08.2008
(73) Proprietor: HANKUK FIBER GLASS CO., LTD, Kyungnam 627-852 (KR)
(72) Inventor: Lee, Seong-Uk, Pusan 604-051 (KR)
(74) Representative: Maser, Jochen
(86) International application number: PCT/KR2006/004530
(87) International publication number: WO 2007/052961

(56) References cited:
- JP-U- 59 037 500
- KR-A- 19990 064 858
- KR-A- 20050 015 840
- US-A- 4 089 285

## Description

### Technical Field

The present invention relates to a method for bonding a secondary gas barrier to an insulation panel in a liquefied natural gas (LNG) carrier or storage tank, and more particularly, to a method for bonding a secondary gas barrier to an insulation panel wherein curing of an adhesive is perfectly carried out, thereby expecting the reduction of a construction period and the improvement of productivity, and thereby reducing the installation costs of the bonding equipment and the repairing costs for the uncuring and defective bonding of the adhesive.

### Background Art

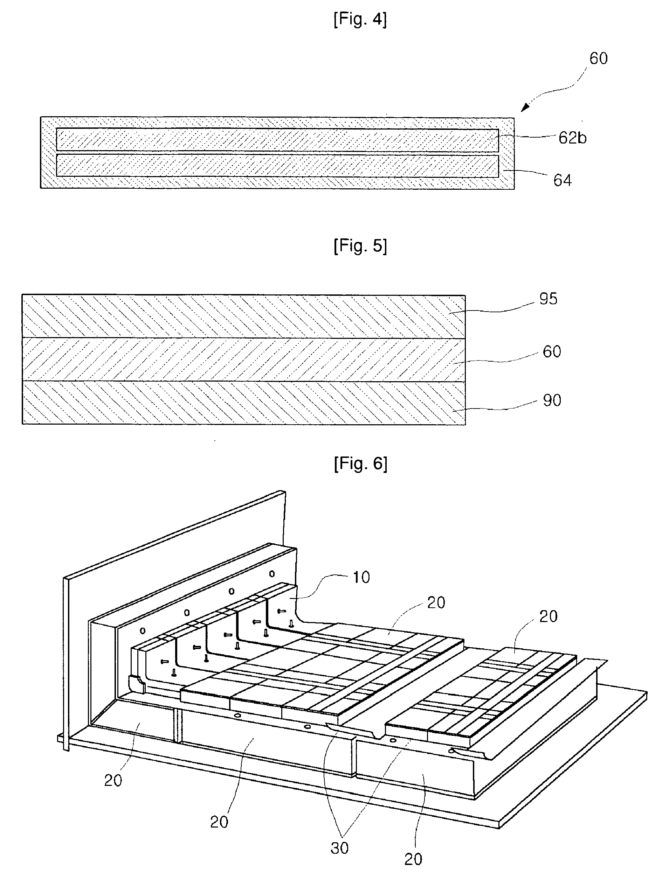

As shown in FIG. 6, an LNG container of an LNG carrier or an LNG storage tank includes a primary gas barrier 10, an insulation panel 20, and a secondary gas barrier 30, for the purpose of stably preventing LNG at a liquefaction temperature of -163°C or less from leaking to the outside under any bad conditions, and of enduring the impact and pressure of the internal LNG or external impacts.

At this time, the primary gas barrier 10 is configured to be in direct contact with the LNG in the LNG carrier or storage tank, while enduring the contraction stresses and impacts due to a very low temperature, which is generally formed of a stainless steel membrane (STS).

The insulation panel 20 is made by attaching a plywood onto both surfaces of a heat insulating material formed of a reinforced polyurethane foam (R-PUF), so as to endure the impact and pressure of LNG and maintain the temperature of LNG of - 163°C at the liquefied state.

Further, the secondary gas barrier 30 has a property of secondarily preventing the LNG from leaking to the outside, if the primary gas barrier 10 is damaged, and it is made by laminating synthetic rubber and glass fiber fabric on both surfaces of an aluminum foil so as to mold them as a unitary body, or by laminating an epoxy/ polyamide film and a reinforcing fiber fabric on both surfaces of an aluminum foil so as to mold them as a unitary body.

Conventionally, an adhesive is applied on the insulation panel 20, and a triplex strip is placed thereon. After that, the insulation panel 20 is pressurized by using an air bag and is cured at a room temperature. Then, the secondary gas barrier 30 is bonded to the insulation panel 20.

Such a conventional bonding method, however, entails problems in that the surface temperature of the insulation panel 20 is not constantly maintained well and the environmental conditions of a working place are not made constantly, thereby failing to obtain constant strengths of the adhesive. This causes the adhesive to remain in an uncuring or incomplete curing state, which yields defective bonding results. Thus, it may reduce the lifespan of the LNG carrier or storage tank or even may cause an accident therefrom. More especially, the bonding strength of the adhesive varies depending on a low temperature in the winter season and a high temperature difference in a change of season.

Since an uneven pressure is applied to the insulation panel 20 during a pressurizing step, also, loose spaces between the insulation panel 20 and the secondary gas barrier 30 are partially formed, which fails to obtain perfect bonding results.

Further a method for bonding a secondary gas barrier to an insulation panel in a liquefied gas storage tank is disclosed in KR 1020050015840 which is consideried to be the closest prior art, whereby an adhesive thermoplastic resin is applied on the insulation panel and a triplex strip is placed thereon. The resin is heated by means of a portable heater and the triplex strip is then mounted to the thermal insulation wall to firmly connect the insulation wall. The use of such portable heater can produce irregular curing of the adhesive resin which may result defective bonding between both barriers.

### Disclosure of Invention

### Technical Problem

Accordingly, it is an object of the present invention to provide a method for bonding a secondary gas barrier to an insulation panel wherein a temperature higher than a room temperature is provided under curing conditions of an adhesive applied for bonding the secondary gas barrier to the insulation panel, thereby obtaining a best bonding strength, and thereby preventing the uncuring or semi-curing of the adhesive, even though a relatively long time period is elapsed during the curing of the adhesive.

It is another object of the present invention to provide a method for bonding a secondary gas barrier to an insulation panel wherein no partial loose space is formed between the insulation panel and the secondary gas barrier, thereby obtaining perfect bonding results.

### Technical Solution

To achieve the above objects, according to the present invention, there is provided a method for bonding a secondary gas barrier to an insulation panel in an LNG carrier or an LNG storage tank, the method including the steps of: applying an adhesive onto the surface of the insulation panel; sequentially laminating the secondary gas barrier, a release film, a cushion pad, a heating pad, and a rigid plate on the adhesive applied on the surface of the insulation panel; heating the adhesive up to a temperature approaching best bonding characteristics by using the heating pad; pressurizing through a pressurizing device the adhesive between the secondary gas barrier and the insulation panel under an even pressure by using the elastic force of the cushion pad and the rigidity of the rigid plate; and maintaining the heating temperature under the pressurizing state at a given constant level to conduct full curing of the adhesive.

At this time, the heating pad is formed of a heating means covered with a coating material.

Also, the heating means is formed of one selected from a carbon plane heating element, a metal heating wire, and a ceramic heating element, and the coating material is formed of one selected from a thermosetting resin, a thermal plastic resin, and a composite material made of a fabric or an organic or inorganic textile.

Further, the cushion pad is formed of a synthetic resin or rubber.

Further, the rigid plate is formed of a plywood, a honeycomb panel, or a laminated board.

The above and other objects and features of the present invention will be better understood from the following description of the preferred embodiment with reference to the drawings.

### Advantageous Effects

According to the present invention, there is provided a method for bonding a secondary gas barrier to an insulation panel, thereby obtaining an excellent bonding strength of an adhesive, thereby reducing the curing time period of the adhesive to improve the productivity, thereby reducing the installation costs necessary for bonding the secondary gas barrier, and thereby decreasing the repairing costs for the defective bonding due to the uncuring or semi-curing of the adhesive.

As the adhesive that is applied between the secondary gas barrier and the insulation panel is pressurized through a pressurizing device under an even pressure by using the elastic force of the cushion pad and the rigidity of the rigid plate, no partial loose space is formed between the insulation panel and the secondary gas barrier, thereby obtaining perfect bonding results.

### Brief Description of the Drawings

FIG.1 is a view showing a method for bonding a secondary gas barrier to an insulation panel according to the present invention;

FIG.2 is a sectional view showing an example of a heating pad employed in the bonding method according to the present invention;

FIG.3 is a sectional view showing another example of a heating pad employed in the bonding method according to the present invention;

FIG.4 is a sectional view showing yet another example of a heating pad employed in the bonding method according to the present invention;

FIG.5 is a sectional view showing an example where a cushion pad, a heating pad, and a rigid plate that are formed as an integral body in the bonding method according to the present invention; and

FIG.6 is a partly cut perspective view showing a sectional structure of an LNG carrier adopting the bonding method according to the present invention.

### Best Mode for Carrying Out the Invention

Hereinafter, an explanation of a method for bonding a secondary gas barrier to an insulation panel according to the present invention will be given with reference to the attached drawings.

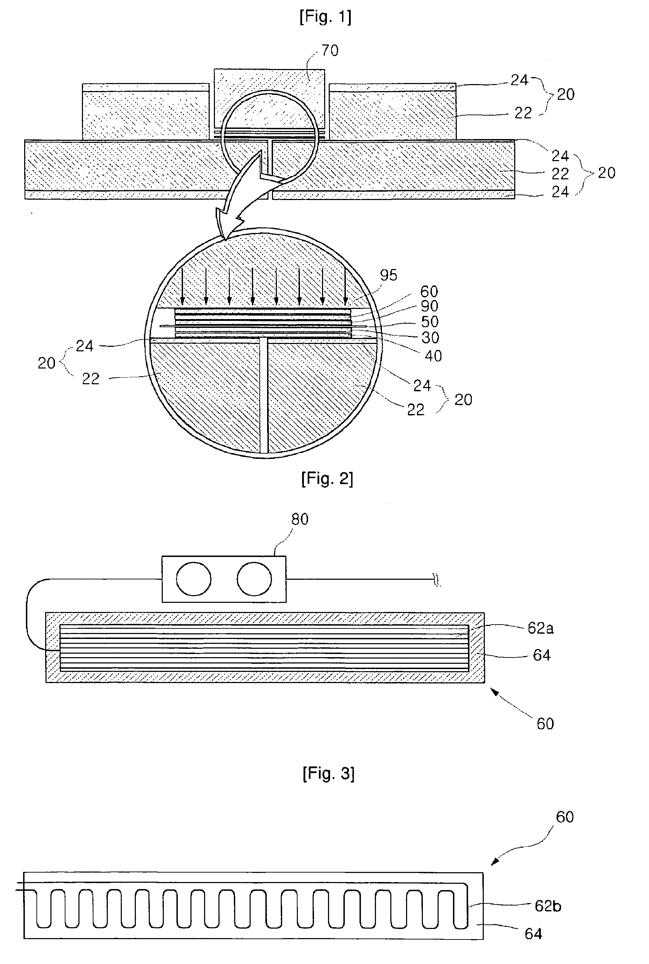

FIG. is a view showing a method for bonding a secondary gas barrier to an insulation panel according to the present invention, FIG.2 is a sectional view showing an example of a heating pad employed in the bonding method according to the present invention, FIG.3 is a sectional view showing another example of a heating pad employed in the bonding method according to the present invention, FIG.4 is a sectional view showing yet another example of a heating pad employed in the bonding method according to the present invention, and FIG.5 is a sectional view showing an example where a cushion pad, a heating pad, and a rigid plate that are formed as an integral body in the bonding method according to the present invention.

As shown in FIG.1, there is provided a method for bonding a secondary gas barrier 30 to an insulation panel 20 according to the present invention, the method including the steps of: applying an adhesive 40 onto the surface of the insulation panel 20; sequentially laminating the secondary gas barrier 30, a release film 50, a cushion pad 90, a heating pad 60, and a rigid plate 95 on the adhesive 40 applied on the surface of the insulation panel 20; heating the adhesive 40 up to a temperature approaching best bonding characteristics by using the heating pad 60; pressurizing through a pressurizing device 70 the adhesive 40 provided between the secondary gas barrier 30 and the insulation panel 20 under an even pressure by using the elastic force of the cushion pad 90 and the rigidity of the rigid plate 95; and maintaining the heating temperature under the pressurizing state at a given constant level to conduct full curing of the adhesive 40, thereby finishing bonding of the secondary gas barrier 30 onto the insulation panel 20.

At this time, the temperature and heating time period where the adhesive 40 approaches the best bonding characteristics are depending upon the type of an adhesive. For example, an epoxy adhesive or a polyurethane adhesive is heated for 3 to 6 hours at a temperature between 25°C and 100°C.

In the preferred embodiment of the present invention, the insulation panel 20 is made by attaching a plywood 24 on both surfaces of a heat insulating material 22 formed of a reinforced polyurethane foam (R-PUF), and the secondary gas barrier 30 is made by laminating an epoxy/polyamide film and a reinforcing fiber fabric on both surfaces of an aluminum foil, thereby molding them as a unitary body. In this case, the insulation panel 20 and the secondary gas barrier 30 of the present invention are freely made, while not being limited to those as mentioned above.

Also, the adhesive 40 is formed of an LNG epoxy adhesive made by Gaztransport & Technigaz in France, and the release film 50 is formed of a vinyl film. In this case, they are freely made, while not being limited to those as mentioned above.

On the other hand, the heating pad 60 serving to heat the adhesive 40 for fully curing the adhesive 40 is formed of a heating means 62 covered with a coating material 64 that has heating time period and temperature controlled by means of a control unit 80, such that under the controlled heating time and temperature, the adhesive 40 can have a high curing strength, thereby achieving a full curing state.

At this time, the heating pad 60, as shown in FIG.2, is formed of the heating means 62 containing a carbon plane heating element 62a, which is covered with the coating material 64 formed of one selected from a thermosetting resin, a thermal plastic resin, and a composite material made of a fabric or an organic or inorganic textile. However, as shown in FIG.3, a metal heating wire 62b may be used as the heating means 62, and the coating material 64 of the metal heating wire 62b is formed of one selected from a thermosetting resin, a thermal plastic resin, and a composite material made of a fabric or an organic or inorganic textile. On the other hand, a ceramic heating element 62c may be used as the heating means 62, and the coating material 64 of the metal heating wire 62b is formed of one selected from a thermosetting resin, a thermal plastic resin, and a composite material made of a fabric or an organic or inorganic textile.

While the secondary gas barrier 30 is being pressurized under an even pressure through the pressurizing device 70, the cushion pad 90 that is disposed between the release film 50 and the heating pad 60 serves to evenly spread the adhesive 40 to conduct the full bonding between the secondary gas barrier 30 and the insulation pad 20, and it is formed of an elastic material, preferably, a synthetic resin or rubber.

Also, the rigid plate 95 is formed of a material having predetermined rigidity capable of evenly transmitting the pressurizing force of the pressurizing device 70, and preferably, it is formed of a plywood, a honeycomb panel, or a laminated board.

On the other hand, as shown in FIG.5, if the cushion pad 90, the heating pad 60, and the rigid plate 95 are formed integrally to one another, the adhesive 40 can be more evenly pressurized when compared with those that are separately made.

This invention having been disclosed, a number of variations will now become apparent to those skilled in the art. Whereas the invention is intended to encompass the foregoing preferred embodiments as well as a reasonable range of equivalents, reference should be made to the appended claims rather than the foregoing discussion of examples, in order to assess the scope of the invention in which exclusive rights are claimed.

### Industrial Applicability

According to the present invention, there is provided a method for bonding a secondary gas barrier to an insulation panel wherein curing of an adhesive is perfectly carried out, thereby causing the reduction of a construction period and the improvement of productivity, and thereby reducing the installation costs of the bonding equipment and the repairing costs for the uncuring and defective bonding of the adhesive.

## Claims

1. A method for bonding a secondary gas barrier to an insulation panel in an LNG carrier or an LNG storage tank, the method comprising the steps of:
applying an adhesive (40) onto the surface of the insulation panel (20);
sequentially laminating the secondary gas barrier (30), a release film (50), a cushion pad (90), a heating pad (60), and a rigid plate (95) on the adhesive (40) applied on the surface of the insulation panel (20);
heating the adhesive (40) up to a temperature having best bonding characteristics by using the heating pad (60);
pressurizing through a pressurizing device (70) the adhesive provided between the secondary gas barrier (30) and the insulation panel (20) under an even pressure by using the elastic force of the cushion pad (90) and the rigidity of the rigid plate (95); and
maintaining the heating temperature under the pressurizing state at a given constant level to conduct full curing of the adhesive (40).

2. The method according to claim 1, wherein the heating pad (60) is formed of a heating means (62) covered with a coating material (64).

3. The method according to claim 2, wherein the heating means (62) is formed of any one selected from a carbon plane heating element (62a), a metal heating wire (62b), and a ceramic heating element (62c), and the coating material (64) is formed of any one selected from a thermosetting resin, a thermal plastic resin, and a composite material made of a fabric or an organic or inorganic textile.

4. The method according to any one of claims 1 to 3, wherein the cushion pad (90) is formed of a synthetic resin or rubber.

5. The method according to any one of claims 1 to 3, wherein the rigid plate (95) is formed of a plywood, a honeycomb panel, or a laminated board.

## Patentansprüche

1. Verfahren zum Aufkleben einer sekundären Gassperre auf eine Isolierplatte in einem LNG-Tanker oder einem LNG-Speicherbehälter, wobei das Verfahren die Schritte umfasst, dass:
ein Klebmittel (40) auf die Oberfläche der Isolierplatte (20) aufgebracht wird;
die sekundäre Gassperre (30), eine Trennfolie (50), eine Dämpfungsmatte (90), eine Heizmatte (60) und eine starre Platte (95) aufeinanderfolgend auf das auf die Oberfläche der Isolierplatte (20) aufgebrachte Klebmittel (40) auflaminiert werden;
das Klebmittel (40) unter Verwendung der Heizmatte (60) auf eine Temperatur erwärmt wird, bei der es die besten Klebeeigenschaften aufweist;
das zwischen der sekundären Gassperre (30) und der Isolierplatte (20) vorhandene Klebmittel durch eine Druckvorrichtung (70) unter gleichmäßiger Druckausübung mittels der Elastizität der Dämpfungsmatte (90) und der Steifheit der starren Platte (95) mit Druck beaufschlagt wird; und
die Heiztemperatur in dem druckbeaufschlagten Zustand auf einem gegebenen, konstanten Niveau gehalten wird, um ein vollständiges Aushärten des Klebmittels (40) in die Wege zu leiten.

2. Verfahren nach Anspruch 1, wobei die Heizmatte (60) aus einer mit einem Überzugsmaterial (64) bedeckten Heizeinrichtung (62) gebildet ist.

3. Verfahren nach Anspruch 2, wobei die Heizeinrichtung (62) wahlweise aus einem Carbon-Flächenheizelement (62a) bzw. einem Metall-Heizdraht (62b) bzw. einem keramischen Heizelement (62c) gebildet ist und das Überzugsmaterial (64) wahlweise aus einem Duroplastharz bzw. einem Thermoplastharz bzw. einem Verbundmaterial aus einem Stoff oder einem organischen oder anorganischen Gewebe gebildet ist.

4. Verfahren nach einem der Ansprüche 1 bis 3, wobei die Dämpfungsmatte (90) aus einem Kunstharz oder Gummi gebildet ist.

5. Verfahren nach einem der Ansprüche 1 bis 3, wobei die starre Platte (95) aus einem Sperrholz, einer Wabenplatte oder einer Mehrschichtenplatte gebildet ist.

## Revendications

1. Procédé permettant de coller une barrière aux gaz secondaire sur un panneau isolant dans un transporteur de GNL ou dans un réservoir de stockage de GNL, ledit procédé comprenant les étapes qui consistent à:
appliquer une colle (40) sur la surface du panneau isolant (20);
laminer de manière successive la barrière aux gaz secondaire (30), un film de séparation (50), un tampon amortisseur (90), un tampon chauffant (60) et un panneau rigide (95) sur la colle (40) appliquée sur la surface du panneau isolant (20);
porter, à l'aide du tampon chauffant (60), la colle (40) à une température à laquelle elle présente les meilleures propriétés adhésives;
comprimer, à l'aide d'un dispositif de compression (70), la colle présente entre la barrière aux gaz secondaire (30) et le panneau isolant (20) en exerçant une pression uniforme grâce à l'élasticité du tampon amortisseur (90) et à la rigidité du panneau rigide (95); et
maintenir, à l'état de compression, la température de chauffage à un niveau constant donné afin d'obtenir un durcissement complet de la colle (40).

2. Procédé selon la revendication 1, dans lequel le tampon chauffant (60) est formé par un dispositif de chauffage (62) recouvert d'un matériau de revêtement (64).

3. Procédé selon la revendication 2, dans lequel le dispositif de chauffage (62) est formé au choix par un élément chauffant mince (62a) en carbone, un filament chauffant (62b) en métal ou un élément chauffant (62c) en céramique, et dans lequel le matériau de revêtement (64) est formé au choix en une résine thermodurcissable, une résine thermoplastique ou un matériau composite en une étoffe ou en un tissu organique ou inorganique.

4. Procédé selon l'une quelconque des revendications 1 à 3, dans lequel le tampon amortisseur (90) est formé en une résine synthétique ou en caoutchouc.

5. Procédé selon l'une quelconque des revendications 1 à 3, dans lequel le panneau rigide (95) est formé en un contreplaqué, en un panneau à structure en nid d'abeille ou en un panneau multicouche.
